Europäisches Patentamt

(19) European Patent Office    (11) Publication number: **0 047 608**
Office européen des brevets                              A1

(12) # EUROPEAN PATENT APPLICATION

(21) Application number: 81303893.2    (51) Int. Cl.³: **C 08 G 63/18, C 08 G 63/34,**
                                                   **C 08 J 5/18**

(22) Date of filing: 26.08.81

(30) Priority: 08.09.80 US 184577

(71) Applicant: Rohm and Haas Company, Independence
Mall West, Philadelphia, Pennsylvania 19105 (US)

(43) Date of publication of application: 17.03.82
Bulletin 82/11

(72) Inventor: Cholod, Michael Stephen, 6409 Todd Court,
Cornwells Heights Pennsylvania, 19020 (US)

(84) Designated Contracting States: BE CH DE FR GB IT LI
NL SE

(74) Representative: Angell, David Whilton et al, Rohm and
Haas Company Patent Department Chesterfield House
Barter Street, London WC1A 2TP (GB)

(54) Poly(ethylene terephthalate) and process for preparing it.

㊵  Poly(ethylene terephthalate) is provided which has a crystallization time of at least 90 seconds at a temperature of 200°C and an intrinsic viscosity of 0.55 to 0.85 dl/g. It is made by forming poly (ethylene terephthalate) prepolymer and polycondensing it in the presence of an amount of catalyst in the form of alkyl titanate, of from 2 to 20 parts of catalyst metal per million parts of polymer product at a temperature of 265 to 300°C. The crystallization time of the poly(ethylene terephthalate) makes it particularly suitable for the preparation of films and moulded articles.

ACTORUM AG

- 1 -

## POLY (ETHYLENE TEREPHTHALATE) AND PROCESS FOR PREPARING IT

This invention is concerned with poly(ethylene terephthalate) resin and methods for making it. The resin is suitable for use in forming films and moulded articles such as bottles. This invention is especially concerned with increasing the crystallization time of poly(ethylene terephthalate) resin so as to give the user, when manufacturing a film or a moulded article, such as a bottle, therefrom more processing time, after the film or moulded article has been formed, before disadvantageous crystallization.

Poly(ethylene terephthalate) can be either crystalline, in which case it is white and opaque, or amorphous, when it is generally clear and glossy and is less brittle than the crystalline form. When manufacturing a film or moulded article from a poly(ethylene terephthalate) resin, the melt polymer is either extruded onto a casting roll or, if a moulded article is to be manufactured, a tubular slug is first formed from the resin and placed into a mould and the slug is then expanded to conform to the shape of the mould. Films or moulded articles are desirably transparent, white opaque films or bottles being commercially undesirable. It is known that, when poly(ethylene terephthalate) is in a heated molten-like to semimolten stage and above its crystalline melting point, it is amorphous. However, unless the resin is quickly cooled, the film or moulded article will tend to crystalize and the resultant product will contain a commercially unacceptable amount of crystalline material so its appearance will be commercially unacceptable.

When processing poly(ethylene terephthalate) there is obviously only a limited amount of time to solidify the film or moulded article and retain the amorphous state of the polymer, before crystallization sets in.

British Patent 793,111 discloses the preparation of polyesters, and particularly poly(methylene terephthalate)s and poly(ethylene terephthalate)s, using an alkyl titanate to catalyze the ester interchange reaction and the subsequent polycondensation reaction whereby the polymer is prepared. This patent teaches that from 0.001% to 1.5% of the tetraalkyl titanate is used based on the original weight of dialkyl terephthalates used. There is no teaching about the problem of increasing the crystallization time of a poly(ethylene terephthalate) resin.

U.S. Patent 4,131,601 discloses using s preformed titanate compound, obtained by reacting titanic acid ester with an aromatic ester, as a polycondensation catalyst in the preparation of polyesters. This patent teaches that although titanium compounds result in a very rapid rate of polycondensation, they also give polyesters which have a distinctly yellow colour and a decreased softening point. A yellow colour, in a film or moulded article, would, in the main, be commercially unacceptable. The '601 patent is silent about the problem of time of crystallization of a poly(ethylene terephthalate) resin.

U.S. Patent 2,822,348 is directed to ester interchange reactions and to the catalysis of these reactions. This patent discloses the use of an alkyl titanate catalyst for such ester interchange

0047608

reaction. It is taught that the reaction, using the alkyl titanate ester, proceeds faster at lower temperatures and that objectionable side reactions are reduced and cleaner products are produced.

U.S. Patent 3,256,241 is directed to the use of alkyl titanates in both an ester interchange and polycondensation reaction to prepare polyesters suitable as fibres.

U.S. Patent 3,803,275 is directed to a method for preparing containers from poly(ethylene terephthalate). This patent discusses the problems of manufacture in processing poly(ethylene terephthalate)resins for films or containers and discloses an elaborate process for preparing a shaped article from a poly(ethylene terephthalate) resin, based on the limited amount of time properly to cool the formed article in order to avoid the formation of crystalline poly(ethylene terephthalate)in the formed article.

U.S.Patent 3,745, 150 is concerned with a container prepared from poly(ethylene terephthalate) and teaches that the poly(ethylene terephthalate) becomes crystalline when it cools and, unless special precautions and procedures are used, the container contains a substantial amount of crystalline poly(ethylene terephthalate) rendering it unsuitable for many uses. The disclosure is based upon the accepted crystallization time, when preparing a formed article, and discloses elaborate procedures for assuring that the formed article will contain substantially all amorphous material.

Thus the problem of rapid crystallization time when manufacturing a formed article from poly(ethylene terephthalate) resin is recognized and the existing solutions are based on attempts to compensate for such crystallization time by providing procedures for rapidly cooling the formed article.

For some purposes, it may be desired to obtain poly(ethylene terephthalate) films or moulded articles of a controlled degree of whiteness and opacity intermediate between colourless, clear and maximum whiteness and opacity. Heretofore the rapid crystallization time rendered such control difficult, if not impossible.

This invention provides a poly(ethylene terephthalate) resin having an intrinsic viscosity of 0.55 to 0.85 d\l/g and a crystallization time of at least 90 seconds often more than 150 seconds at a temperature of 200°C.

This invention also provides a process for preparing such a poly(ethylene terephthalate) resin comprising forming a poly(ethylene terephthalate) prepolymer and poly-condensing said prepolymer at a temperature of from 265°C to 300°C in the presence of from 2 to 20 parts of catalyst metal, in the form of an alkyl titanate, per million parts of polymer product.

The term "substantially amorphous" as used in the specification and claims, means that at least 95% by weight of the final product, lacks a crystalline structure.

The poly(ethylene terephthalate) prepolymer may be formed by an ester interchange reaction or

- 5 -

by direct esterification reaction between ethylene glycol and terephthalic acid.

Such an ester interchange reaction can take place between ethylene glycol and dimethyl terephthalate. The reaction is generally conducted under atmospheric pressure and at a temperature of from $160^{\circ}$ C to $225^{\circ}$C. During such a reaction, methyl alcohol is distilled off as a by-product.

In the direct esterification of ethylene glycol and terephthalic acid the pressure is generally 1 or 2 atmospheres and the temperature is generally from $220^{\circ}$C to $260^{\circ}$C. During the esterification reaction, water is distilled off.

Although the direct esterification reaction may be conducted without a catalyst, a catalyst is often used to reduce esterification time, minimize the diethylene glycol content of the final poly(ethylene terephthalate) and improve the colour of the final product. Among the esterification catalysts which may be used are zinc acetate, calcium acetate, titanium ethoxide, manganous acetate and antimony oxalate. Suitable esterification catalysts are well known.

The direct esterification reaction is generally considered complete when no further water is distilled off or the amount of water distilled is about 90% to 95% of the theoretical yield.

The mole amount of ethylene glycol used for each mole of dimethyl terephthalate or terephthalic acid used will generally vary from 1.8 to 2.2 moles of ethylene glycol per mole of dimethyl terephthalate

00363

or terephthalic acid and preferably will be a mole ratio of from 2 to 1.

If less than 1.8 moles of the ethylene glycol is used for each mole of terephthalic acid or dimethyl terephthalate, then the reaction will not go to completion efficiently. If more than 2.2. moles of ethylene glycol for each mole of dimethyl terephthalate or terephthalic acid is used, then there will be more glycol present than is needed, although such greater amounts may result in a faster reaction rate. However, the economic disadvantage of using more glycol than is necessary, may offset the faster reaction rate.

The amount of metal-containing catalyst which is used in the ester interchange reaction may vary widely but will generally be from 20 parts to 200 parts of catalyst metal, per million parts of dimethyl terephthalate.

Among suitable ester interchange catalysts are manganous acetate, lithium acetate, sodium methylate, magnesium acetate, cobalt acetate, calcium acetate, cobalt dichloride, manganese acetate tetrahydrate, zinc acetate and sodium hydrogen hexabutyloxy titanate.

The ester interchange reaction is considered complete when, at the temperature of from about 160° to about 225°C., either the amount of methanol distilled from the reaction is about 90 to 95% of the theoretical yield or no further methanol is removed.

After the ester interchange or direct esterification reaction is completed, the reaction mixture containing the poly(ethylene terephthalate) prepolymer is polycondensed at a temperature of from 265°C to 300°C. The amount of catalyst used in the polycondensation reaction may vary widely from about 2 parts to about 20 parts, based on the amount of metal present in the catalyst, per million parts of calculated polymer product. It is preferred, however, that from 2 to 16 parts of catalyst, on the aforesaid basis, be used and most preferably from 8 to 12 parts. Although the amount of catalyst present may exceed 20 parts per million, e.g., 50 parts, unless compensating steps are taken, the resultant resin may be discoloured, usually yellow.

Any titanic acid ester may be used as the catalyst. Among such catalysts may be mentioned tetramethyl titanate, tetraethyl titanate, tetrapropyl titanate, tetraisopropyl titanate, and tetra-n-butyl titanate.

The polycondensation reaction is generally conducted under a vacuum at a pressure of less than one torr.

The polycondensation reaction is generally considered complete when the reaction product becomes sufficiently thick for example as determined from the amount of power that is required to drive the stirrer which is present in the reaction kettle.

After the polycondensation reaction is complete, the resin is removed from the kettle and may then be extruded into ribbons and diced.

If desired, the molecular weight of the resultant resin may be increased by heating the resin to a temperature above its glass transition temperature but below its melting point and passing a stream of an inert gas over the resin or by holding the resin under vacuum for a period of from 8 to 14 hours at a temperature of from 200°C. to 235°C.

The resultant resin has an intrinsic viscosity of from 0.55 to 0.85 d/g and preferably from 0.70 to 0.76 d/g ~~determined in a 60/40 phenol/symmetrical tetrachloroethylene at 30°C.~~

When preparing the resin, the starting materials may include other acidic comonomers besides dimethyl terephthalate and/or terephthalic acid so that the final product may have up to 2% by weight of non-poly(ethylene terephthalate) repeating units and the term "poly(ethylene terephthalate) is to be so construed. Other comonomers which may be present in a total amount of up to 2% by weight include diethylene glycol, isophthalic acid, propane-1, 3-diol, butane 1,4-diol, polytetramethylene glycol, polyethylene glycol, polypropylene glycol, 1,4-hydroxymethylcyclohexane, bibenzoic acid, naphthalene 1,4 or 2,6-dicarboxylic acid, adipic acid, sebacic acid, decene 1, 10 dicarboxylic acid and esters thereof.

It should be understood that when the poly(ethylene terephthalate)prepolymer is prepared by an ester interchange reaction, any other comonomers which are included are usually all esters and when the direct esterification route is used, such other comonomers are usually all acids.

One may also include other glycols besides ethylene glycol in an amount so that the final product will have up to 2% by weight of non-poly(ethylene terephthalate) repeating units. Such other glycols

0047608

- 9 -

include neopentyl glycol, propylene glycol and butylene glycol.

The poly(ethylene terephthalate) resin may also be compounded with various additives such as antioxidant stabilizers, ultraviolet light screening agents, extrusion aids, dyes, or pigments and mould release agents for end use. Other possible additives are known which must not adversely affect the resin in its intended use.

In the examples which follow, the following test procedures were used.

Intrinsic viscosities are determined in a solvent system 60/40 (by weight) phenol/symmetrical tetrachloroethane at 30°C.

Crystallization time is determined using a Perkin Elmer DSC-II differential scanning calorimeter using the following procedure. Approximately 10 milligrams of dried poly(ethylene terephthalate) resin is placed in the sample pan which is then placed in the calorimeter. The sample is heated to 573°K and held at that temperature in order to melt the poly(ethylene terephthalate). After 120 seconds at 573°K, the sample is cooled at a rate of 160°K per minute to a final temperature of 473°K (200°C.). The exotherm is recorded and the crystallization time is taken as the time from the point that the recorder pen stabilizes on the base line to the time of maximum crystallization exotherm.

Some preferred embodiments of this invention are given, for illustration only in the following Examples. All parts and percentages are by weight unless otherwise specified.

EXAMPLE 1

To a three necked reaction vessel equipped with a stirrer, condenser arranged for distillation and a thermometer, is added 1000 parts of dimethyl terephthalate, 626 parts ethylene glycol, 0.07 parts of manganese as manganous acetate (70 parts per million of final product) and 0.02 part cobalt as cobalt acetate (20 parts per million of final product). The reaction mixture is heated at a temperature of from 160°C. to 225°C. for a period of 97 minutes while removing 290 parts of methanol. Phosphorous acid (0.148 part) is then added as a stabilizer. 0.0083 part of titanium, as tetraisopropyl titanate (8.3 parts of metal per million parts of final product), is added as a catalyst. The pressure is reduced to less than one torr and the reaction temperature is increased to 280°C. to 290°C. to remove ethylene glycol by-product. After 60 minutes, poly(ethylene terephthalate having an intrinsic viscosity of 0.59 dl/g. (diciliters per gram) is obtained.

The crystallization time of the resultant resin, measured at 200°C. is 90 seconds.

EXAMPLES 2 TO 10

The procedure of Example one is repeated nine times with the following variations in addition to those indicated in the Table following.

In Example 5, the ester interchange catalyst is used in an amount such that 50 parts of manganese and 40 parts of cobalt, both per million parts of final product, are used. In addition, 112 parts of phosphorous, as phosphorous acid is used.

In Example 8, dimethyl isophthalate is present in an amount such that the final product contains up to 2%, based on the repeating units of said resin, of the dimethyl isophthalate moiety. Additionally, the ester interchange catalyst is used in an amount such that 40 parts of manganese and 60 parts of cobalt, both per million parts of final product, are present.

In Example 9, the ester interchange catalyst is present in an amount such that 70 parts of manganese and 20 parts of cobalt, both per million parts of final product, are present. Example 9 is a comparative example wherein a different polycondensation catalyst is used and demonstrates the effect of the different catalyst on the crystallization time of the final resin.

In Example 10, a coglycol, neopentyl glycol, is used in an amount such that the final product has up to 2% of its repeating units derived from the coglycol.

The results are presented in the following Table.

| Example No. | Polycondensation Catalyst | Amount of Polycondensation Catalyst (parts of metal per million parts of final product) | Intrinsic Viscosity (dl/g) | Crystallization Time |
|---|---|---|---|---|
| 2 | tetraisopropyl titanate | 8.3 | 0.766 | 220 seconds |
| 3 | tetraisopropyl titanate | 8.3 | 0.85 | 420 seconds |
| 4 | tetraisopropyl titanate | 3 | 0.625 | 160 seconds |
| 5 | tetraisopropyl titanate | 12 | 0.698 | 110 seconds |
| 6 | tetramethyl titanate | 8 | 0.619 | 97 seconds (polycondensation time is 66 minutes |
| 7 | tetraisopropyl titanate | 20 | 0.636 | 95 seconds (polycondensation time is 68 minutes |
| 8 | tetraisopropyl titanate | 10 | 0.632 | 125 seconds |
| 9 | $Sb_2O_3$ | 240 | 0.62 | less than 40 seconds |
| 10 | tetraisopropyl titanate | 10 | 0.56 | 120 seconds |

For the avoidance of any doubt, more precise details of the method for determining intrinsic viscosity, are as follows:

A specific weight of polyester sample is dissolved in 25 ml of phenol/sym-tetrachloroethane (60/40 by weight) solvent. The solution is transferred to a Ubbelohde viscometer and the system is allowed to equilibrate to $30\pm0.02^{\circ}C$. The solvent and solution flow times are determined in the same viscometer tube. First the relative viscosity, Nr is calculated according to the formula:

$$Nr = \frac{solution\ flow\ time}{solvent\ flow\ time}$$

Intrinsic viscosity, $[N]$ is then calculated according to the formula:

$$[N] = \lim_{C\to0} \frac{Nr}{C}$$

C = concentration of polyester in the solvent in grams of polyester per decaliter of solution.

0047608

CLAIMS:

— 14 —

1. Poly(ethylene terephthalate) having an intrinsic viscosity of 0.55 to 0.85 dl/g when measured in 60/40 (by weight) phenol/symmetrical tetrachloroethane solvent system at $30^{\circ}C$ and a crystallization time of at least 90 seconds at a temperature of $200^{\circ}C$.

2. Poly(ethylene terephthalate) according to Claim 1 having an intrinsic viscosity of 0.70 to 0.76 dl/g and a crystallization time of at least 150 seconds at $200^{\circ}C$.

3. Poly(ethylene terephthalate) according to Claim 1 or 2 having up to 2% by weight of non-poly(ethylene terephthalate) units, preferably isophthalic ester units.

4. Substantially amorphous poly(ethylene terephthalate) according to any preceding claim.

5. Poly(ethylene terephthalate) as claimed in any preceding claim in the form of a film or a moulded article.

6. A process for preparing poly(ethylene terephthalate) having crystallization time of at least 90 seconds at a temperature of $200^{\circ}C$ and an intrinsic viscosity of 0.55 to 0.85 dl/g when measured in 60/40 (by weight) phenol/tetra-chloroethane solvent system at $30^{\circ}C$ comprising the steps of forming a polyethylene terephthalate prepolymer and polycondensing said prepolymer in the presence of from about 2 to about 20 parts of catalyst metal, in the form of an alkyl titanate, per million parts of polymer product, and at a temperature of from $265^{\circ}C$ to $300^{\circ}C$.

7. A process according to Claim 6 wherein the poly(ethylene terephthalate) prepolymer is formed by reacting ethylene glycol with dimethyl

terephthalate in the presence of an ester interchange catalyst or by reacting ethylene glycol with terephthalic acid.

8.      A process according to Claim 6 or 7 wherein said alkyl titanate is tetraisopropyl titanate, tetra-n-butyl titanate and/or tetramethyl titanate.

9.      A process according to Claim 6,7 or 8 as applied to the preparation of polyethylene terephthalate as claimed in any one of Claims 2 to 5.

European Patent
Office

EUROPEAN SEARCH REPORT

0047608
Application number

EP 81 30 3893.2

# DOCUMENTS CONSIDERED TO BE RELEVANT

| Category | Citation of document with indication, where appropriate, of relevant passages | Relevant to claim |
|---|---|---|
| | DD - A - 141 426 (AKADEMIE DER WISSENSCHAFTEN DER DDR) <br> * pages 5, 6 * | 1,2, 6,7 |
| | GB - A - 766 290 (GOODYEAR TIRE & RUBBER CO.) <br> * page 2, lines 10 to 33 * | 3 |
| | BE - A - 701 698 (EASTMAN KODAK CO.) <br> * abstract, page 5, lines 17 to 27 * <br> & GB - A - 1 202 553 | 3,6-9 |
| D | GB - A - 793 111 (IMPERIAL CHEMICAL INDUSTRIES LTD.) <br> * claims 1 to 3, 13; page 3, table II * | 6-9 |
| | FR - A - 1 303 845 (FARBWERKE HOECHST AG VORMALS MEISTER LUCIUS & BRÜNING) <br> * abstract, page 1, column 1, lines 4 to 20 * | 3 |
| | DE - B - 1 520 098 (IMPERIAL CHEMICAL INDUSTRIES LTD.) <br> * column 2, lines 21 to 25 * | 8 |

./..

**CLASSIFICATION OF THE APPLICATION (Int Cl³)**

C 08 G    63/18
C 08 G    63/34
C 08 J     5/18

**TECHNICAL FIELDS SEARCHED (Int. Cl.³)**

C 08 G    63/00
C 08 J     5/18

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | | |
|---|---|---|---|---|
| X | The present search report has been drawn up for all claims | | | |
| Place of search <br> Berlin | Date of completion of the search <br> 25-11-1981 | Examiner <br> IDEZ | | |

EPO Form 1503.1   06.78

European Patent Office

**EUROPEAN SEARCH REPORT**

0047608

Application number

EP 81 30 3893.2
- page 2 -

## DOCUMENTS CONSIDERED TO BE RELEVANT

| Category | Citation of document with indication, where appropriate, of relevant passages | Relevant to claim |
|---|---|---|
| A | Chemical Abstracts vol. 78, no. 11, 19 March 1973 Columbus, Ohio, USA F. VAN ANTWERPEN et al. "Influence of crystallization temperature, molecular weight, and additives on the crystallization kinetics of poly(ethylene terephthalate)" page 14, column 2, abstract no. 72793u & J. Polym. Sci., Polym. Phys. Ed. vol. 10, no. 12, 1972, pages 2423 to 2435 -- | |
| A | Chemical Abstracts vol. 71, no. 26, 29 December 1969 Columbus, Ohio, USA J.B. JACKSON et al. "Crystallization of poly(ethylene terephthalate) and related copolymers" page 18, column 2, abstract no. 125115p & Annu. Tech. Conf., Soc. Plast. Eng., Tech. Pap., vol. 27, no. 15, 1969 pages 11 to 15 ---- | |

CLASSIFICATION OF THE APPLICATION (Int. Cl.³)

TECHNICAL FIELDS SEARCHED (Int. Cl.³)